# EUROPEAN PATENT SPECIFICATION

(11) **EP 3 726 496 B1**
(45) Date of publication and mention of the grant of the patent: **04.12.2024**
(21) Application number: 18888641.0
(22) Date of filing: 14.12.2018
(51) Int. Cl.: G08G 1/0967, G01C 21/26, B60W 50/14, G08G 1/09, G08G 1/0962, B60W 30/14, G06V 10/80, G06V 20/56, G06V 20/58, G08G 1/052, G06F 18/25

(54) **METHOD FOR DETERMINING SAFE SPEED INFORMATION OF ROAD**
VERFAHREN ZUR BESTIMMUNG VON INFORMATIONEN ZUR SICHEREN GESCHWINDIGKEIT EINER STRASSE
PROCÉDÉ DE DÉTERMINATION D'INFORMATIONS DE VITESSE DE SÉCURITÉ D'UNE ROUTE

(30) Priority: 15.12.2017 CN 201711346070
(43) Date of publication of application: 21.10.2020
(73) Proprietor: NIO (Anhui) Holding Co., Ltd., Hefei City, Anhui Province (CN)
(72) Inventor: ZHAO, Laigang, Shanghai (CN); GUO, Daoyan, Shanghai (CN); ZHANG, Jianyong, Shanghai (CN); CAI, Xiongfeng, Shanghai (CN)
(74) Representative: Vossius & Partner Patentanwälte Rechtsanwälte mbB
(86) International application number: PCT/CN2018/120991
(87) International publication number: WO 2019/114805

(56) References cited:
- CN-A- 102 753 865
- CN-A- 104 535 070
- CN-A- 105 046 999
- CN-A- 105 718 860
- CN-A- 107 328 411
- JP-A- 2014 029 280
- JP-B2- 5 803 285
- US-A1- 2013 245 945
- US-A1- 2017 308 759

## Description

### Technical Field

The invention relates to the technical field of road safety, and more particularly, to a method for determining safety speed information of a road.

### Background Art

When a vehicle is driving on a road (especially on a highway), a driver needs to well combine a personal driving intention with speed limit information of the current road, and drive as fast as possible under the premise of ensuring safe driving and not violating traffic rules.

Traditional vehicle navigation applications have integrated speed limit information for most road segments, but the speed limit information is relatively rough and lacks speed limit information for a single lane. For example, for a road with 4 parallel lanes in the same direction, there may be a significant difference in speed limit between the first lane and the fourth lane. When the driver changes lanes, he or she almost certainly needs to pay attention to the change in corresponding speed limit information. In autonomous driving technology, however, this change in speed limit information is also an important factor that should be considered.

In addition, the safety speed in a straight road segment will be higher than that in a curved road segment, and in the navigation application of the prior art, the safety speeds for different road segments and real-time road conditions are not accurately expressed, which may cause the driver and occupants to feel a strong centrifugal effect when entering a curved road segment from a straight road segment.

US 2017/308759 A1 relates to methods, systems, and apparatuses for determining or estimating a speed limit.

JP 5 803285 B2 relates to a technology for acquiring and setting a speed limit for speed limitation.

US 2013/245945 A1 relates to a navigation device, a recommended speed arithmetic device, and a recommended speed presentation device mounted in a moving object, such as a vehicle, for computing a recommended safe speed having a small amount of energy consumption, and for presenting the recommended speed to the user.

### Summary of the Invention

The invention is defined by the independent claims. Further embodiments of the invention are defined by the dependent claims.

An object of the invention is to provide a method that can more accurately determine safety speed information of a road to improve the driving experience.

The method for determining safety speed information of a road provided by the embodiments of the invention can more accurately determine the speed limit information of the current lane, and then can determine different safety speed information for different road segments and real-time road conditions, and recommending this safety speed to the user can avoid the user's distraction, which is conducive to improving the user's driving experience and driving safety. The driving assistance system can reduce a degree of involvement for a driver when driving, and also make the occupants feel smooth and comfortable throughout the journey, thereby improving the riding experience.

### Brief Description of the Drawings

Fig. 1 shows a schematic flow chart of a method for determining safety speed information of a road provided by a first embodiment of the invention.
Fig. 2 shows a structural schematic diagram of modules of a driving assistance system based on road speed limit information provided by a second embodiment of the invention.

### Detailed Description of Embodiments

Specific details are presented in the following description in order to provide a thorough understanding of the invention. However, those skilled in the art will clearly know that embodiments of the invention can be implemented even without these specific details. In the invention, specific numerical references may be made, such as "first element", "second device" and so on. However, specific numerical references should not be understood as having to obey their literal order, but rather as "first element" and "second element" being different.

The specific details proposed by the invention are only exemplary, and the specific details may vary, but still fall within the scope of the invention. The term "coupled" is defined to mean being directly connected to a component or indirectly connected to a component via another component.

The preferred embodiments of a method, a system and a device suitable for implementing the invention are described below with reference to the accompanying drawings. Although the embodiments are described for a single combination of elements, it should be understood that the invention includes all possible combinations of the disclosed elements. Therefore, if one embodiment includes elements A, B and C, and a second embodiment includes elements B and D, the invention should also be considered to include other remaining combinations of A, B, C or D, even if not explicitly described.

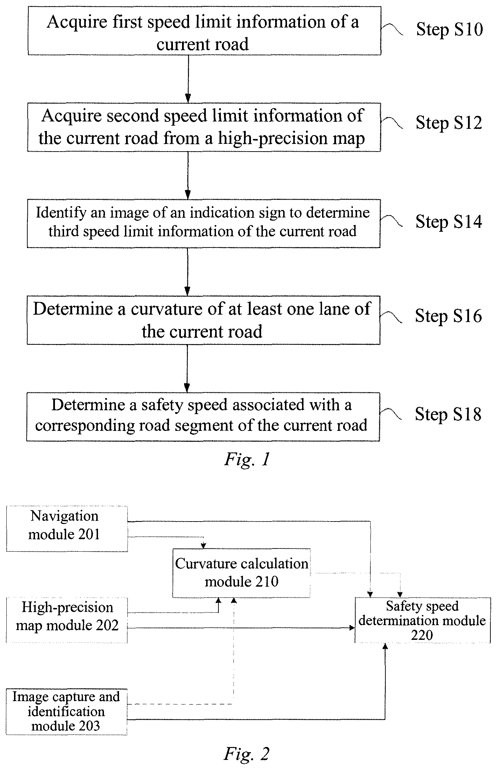

As shown in Fig. 1, the first embodiment of the invention provides a method for determining safety speed information of a road. The following example will be described by taking this method running in a vehicle as an example. The method for determining safety speed information of a road comprises the following steps.

Step S 10, first speed limit information of a current road is acquired.

Illustratively, a navigation map can be queried by a navigation software that comes with the vehicle, and the first speed limit information of the current road can be acquired from the navigation map, which may be the maximum speed limit or the minimum speed limit of the current road or include the two if they both exist. Optionally, the first speed limit information of the current road may also be acquired through a navigation map provided by a non-vehicle-equipped device (an external device). In this example, the non-vehicle-equipped device may be a mobile terminal such as a mobile phone, and the mobile terminal may communicate with a device for running the method for determining safety speed information of a road, such that the latter acquires the first speed limit information from map information provided by the mobile terminal. In a case where the method for determining safety speed information of a road is performed by a vehicle's driving assistance system, etc., the mobile terminal can communicate with the vehicle, and then transmit the information to the driving assistance system.

Step S12, second speed limit information of the current road is acquired from a high-precision map.

The high-precision map is described relative to an ordinary navigation map. On the one hand, the high-precision map can provide position coordinates of a higher precision, and on the other hand, it contains richer and more detailed road traffic information. The high-precision map not only has high-precision coordinates, but also has more accurate road shapes, and even includes data for slope, curvature, heading, elevation, and roll of each lane. However, the high-precision map is usually limited in scope, for example, only provided on highways.

The high-precision map can provide speed limit information for each lane in the highway, which is called herein as "second speed limit information". In the case where the current road is not covered by the high-precision map, the "second speed limit information" is defined as blank, which means that the speed limit information included in the high-precision map cannot be acquired. Even if the speed limit information cannot be acquired, the method provided in the embodiments of the invention are still executable, except that the "second speed limit information" at this time is represented as blank.

According to an embodiment of the invention, the high-precision map can be provided to a vehicle control system in real time by an external supplier in the cloud. As an alternative, a high-precision map module, which pre-loads high-precision map information of an area of interest to a user, can be provided on a vehicle side. In the future driving process, the high-precision map module can be automatically updated to acquire the latest update information about the high-precision map, so as to acquire the second speed limit information therefrom.

Step S14, an image of an indication sign is identified to determine third speed limit information of the current road.

Specifically, images of one or more indication signs on the current road can be captured in real time by means of an image capturing device such as a camera. These indication signs generally indicate the direction information of the road, the maximum speed limit and the minimum speed limit of the lane, and other information about road traffic. The indication signs may include an indicator drop, an indication board, and an electronic screen.

According to an embodiment of the invention, through simple image processing, images of all indication signs in the field of view of an image capturing device are captured first, and then an image identification algorithm is used to identify the content of speed limit information therefrom to form the third speed limit information.

Generally, since the image capturing device will target the road indication sign above or beside the lane where the vehicle is currently located, the identified third speed limit information will include at least the speed limit information of the lane where the vehicle is located and may also include speed limit information of other lanes for use when the vehicle changes lanes.

Step S16, a curvature of at least one lane of the current road is determined.

It should be understood that the curvature or radius of curvature of the lane is different on different road segments, the curvature is relatively large in a curved road segment, and the curvature is relatively small or even 0 in a straight road segment.

It should also be understood that the safety speed may be relatively high in the straight road segment and relatively low in the curved road segment, to prevent a passenger from feeling a relatively large centrifugal force when passing through the curved road segment at a relatively high speed.

In view of this, the safety speeds of different road segments should be affected by the curvature of the lane. According to an embodiment of the invention, the curvature of the lane may be acquired by a navigation software that comes with the vehicle. Alternatively, the curvature of the lane may be directly acquired from the high-precision map information.

Preferably, another image capturing device may be used to capture a lane image of the lane where the vehicle is located, to extract lane line information therefrom to directly calculate, or to help determine, or correct the curvature previously acquired from the map information.

It should be understood that both the image capturing device for identifying the image of the indication sign and the image capturing device for capturing the lane line image of the lane where the vehicle is located may be existing image sensing devices of the vehicle, such as cameras. However, in the case where the existing vehicle camera is insufficient to realize the above operations, an image capturing device may also be added as needed.

Step S 18, a safety speed associated with a corresponding road segment of the current road is determined on the basis of the first speed limit information, the second speed limit information, and the third speed limit information.

According to an embodiment of the invention, first, second and third safety speeds may be generated based on the first, second and third speed limit information, respectively, which may be different or the same. It should be understood that the first safety speed should be lower than the maximum speed limit contained in the first speed limit information and higher than the minimum speed limit contained therein (if the minimum speed limit is included). The cases for the second and third safety speeds are similar.

The "safety speed", which is different from the maximum speed limit, can be defined as the maximum speed that a driver can use under the premise of ensuring safe driving without violating traffic rules, or a conventional speed preferred by the driver or occupant. If a vehicle is driving beyond a safety speed, the occupant may experience discomfort.

According to an embodiment of the invention, one or more of the first, second and third speed limit information and the first, second and third safety speeds may be further recommended to the user in real time.

As an example, when the first, second and third safety speeds are not exactly the same, for safety reasons, the lowest speed value is extracted therefrom as the final output safety speed to remind the driver, or directly applied to the driving assistance system of the vehicle.

As another example, the mathematical intermediate value of the first, second and third safety speeds is taken as the final output safety speed to remind the driver, or directly applied to the driving assistance system.

According to a preferred embodiment of the invention, the safety speed is associated with the road segment. In other words, on road segments with different curvatures, different safety speeds will be recommended to the driver. As an example, on a curved road segment with a relatively large curvature, the safety speed recommended to the driver is 30 km/h; in a curved road segment with a relatively small curvature, the safety speed recommended to the driver is 70 km/h; and in a road segment with the curvature of 0, the safety speed is 110 km/h.

It can be derived from the above that the curvature of the lane is negatively correlated with the safety speed of the corresponding road segment. In other words, as the curvature decreases, the safety speed increases; and as the curvature increases, the safety speed decreases. Further, a correspondence relationship table can be generated for each road to record the correspondence relationship between different road segments and safety speeds, and to form historical data to store same. In future trips, if the user passes through the same road segment or a round-trip road segment (or the road segment through which the user has driven), a safety speed can be recommended to the driver based on the historical data.

According to the method of the first embodiment described above, by acquiring the speed limit information of the road from different channels, the vehicle can be driven at a high speed as much as possible on the premise of ensuring safe driving and not violating traffic rules, and the user's distraction can also be avoided. Such an improvement is conducive to improving the user's driving experience.

In addition, according to yet another embodiment of the invention, further provided is a driving assistance method, comprising: using the method provided by the first embodiment described above to determine the safety speed information, and further to recommend the safety speed to the user or to apply the safety speed to the vehicle driven by the user.

As shown in Fig. 2, the second embodiment of the invention provides a driving assistance system based on road speed limit information, the system comprising a navigation module 201, a high-precision map module 202, an image capture and identification module 203, a curvature calculation module 210, and a safety speed determination module 220. The driving assistance system can determine the safety speed of the current road segment, and then assist in driving the vehicle based on this safety speed, so as to reduce a degree of involvement for a driver when driving.

The navigation module 201 is provided on the vehicle side, and can acquire first speed limit information of the current road. The high-precision map module 202 can be directly provided on the vehicle side, or alternatively may be provided in the cloud to transmit high-precision map information to the vehicle side in near real time, which can determine second speed limit information of the current road.

The image capture and identification module 203 can continuously capture images of the indication sign on the current road, and identify these images to determine third speed limit information of the current road. Specifically, the image capture and identification module 203 may also comprise an image capturing unit and an image identification unit, and an optional image pre-processing unit. The image capturing unit continuously captures images about above or beside the road. The image pre-processing unit analyzes whether these images involve in road indication signs. If the indication signs are involved, the image is transferred to the image identification unit, and the image identification unit identifies the image to extract related speed limit information. When the image capturing unit has a large field of view and can capture and record multiple indication signs at different positions, the image identification unit can further determine the distance between the different indication signs and the vehicle, and use the indication sign closest to the vehicle as a main analysis target to determine the speed limit information of the current lane where the vehicle is located.

According to an embodiment of the present invention, the curvature calculation module 210 can determine a curvature of at least one lane of the current road on the basis of a first input from the navigation module 201 and a second input from the high-precision map module 202.

According to another improved embodiment of the invention, the curvature calculation module 210 also acquires a third input from the image capture and identification module 203, and combines the first input, the second input and the third input to synthetically calculate curvature information (curvature or radius of curvature) of the current lane.

The safety speed determination module 220, on the basis of the first speed limit information, the second speed limit information and the third speed limit information, and in further combination with the curvature information output by the curvature calculation module 210 to determine a safety speed associated with a corresponding road segment of the current road.

As a more preferred embodiment, the driving assistance system will choose to apply a relatively small safety speed on a curved road segment with a large curvature, while the driving assistance system will choose to apply a high safety speed on a road segment with a small curvature or on a straight road segment.

In some embodiments of the invention, at least part of the system may be implemented using a set of distributed computing devices connected to a communication network, or based on "cloud". In such a system, multiple computing devices operate together to provide services by using their shared resources.

As an example, the high-precision map module 202 and/or the safety speed determination module 220 may be provided at a remote end or in the cloud. The navigation module 201, the image capture and identification module 203 and the curvature calculation module 210 are provided at a vehicle local end.

"Cloud"-based implementation can provide one or more advantages, including: openness, flexibility and extensibility, central management, reliability, scalability, optimization of computing resources, the ability to aggregate and analyze information across multiple users, connecting across multiple geographic areas, and the ability of using multiple mobile or data network operators for network connectivity.

According to yet another embodiment of the invention, there is also provided a controller, which can implement, when executable instructions stored in a memory are executed, the method for determining road safety speed information provided in the first embodiment described above. Specifically, the controller can execute the steps of the method in an appropriate order by allowing different hardware to cooperate with each other.

According to yet another embodiment of the invention, there is also provided a storage medium for storing computer executable instructions, wherein the computer executable instructions, when executed by a processor, will perform the steps involved in the method for determining safety speed information of a road provided in the first embodiment described above.

Although the invention has been explained in relation to its preferred embodiment(s) as mentioned above, it is to be understood that many other possible modifications and variations can be made without departing from the scope of the present invention, which is defined by the claims.

## Claims

1. A method for determining safety speed information of a road, comprising:
a) acquiring first speed limit information of a current road from a navigation map;
b) acquiring second speed limit information of the current road from a high-precision map;
c) capturing an image of at least one indication sign on the current road by means of an image capturing device, and identifying the image to determine third speed limit information of the current road;
d) determining a curvature of a current lane based on a first input from the navigation map, a second input from the high-precision map, and a third input from the image capturing device; and
e) determining a safety speed associated with a corresponding road segment of the current lane on the basis of the first speed limit information, the second speed limit information, the third speed limit information, and the curvature of the current lane,
wherein the high-precision map provides the second speed limit information for each lane in a highway,
wherein the high-precision map includes data for slope, curvature, heading, elevation, and roll of each lane,
wherein the second speed limit information comprises speed limit information of each lane on the current road, and
wherein the third speed limit information comprises at least speed limit information of a lane where a vehicle is located.

2. The method according to claim 1, further comprising:
capturing an image of the current lane to extract lane line information therefrom, and determining the curvature of the current lane on the basis of the lane line information.

3. The method according to claim 1, wherein the curvature of the current lane is negatively correlated with the safety speed of the corresponding road segment.

4. The method according to any one of claims 1 to 3, further comprising:
recommending to a user in real time at least one of the first speed limit information, the second speed limit information, the third speed limit information, and the safety speed.

5. The method according to any one of claims 1 to 3, further comprising:
recommending to a user, when the user drives through a road segment that he or she once passed, the safety speed on the basis of historical data about the safety speed of the road segment.

6. A driving assistance method, comprising:
using a method according to any one of claims 1 to 5 to recommend to a user the safety speed or to apply the safety speed to a vehicle driven by a user.

7. A driving assistance system based on road speed limit information, comprising:
a navigation module (201) for acquiring first speed limit information of a current road;
a high-precision map module (202) for determining second speed limit information of the current road;
an image capture and identification module (203) for capturing an image of at least one indication sign on the current road, and identifying the image to determine third speed limit information of the current road;
a curvature calculation (210) module for determining a curvature of a current lane on the basis of a first input from the navigation module (201), a second input from the high-precision map module (202) and a third input from the image capture and identification module (203); and
a safety speed determination module (220) for determining a safety speed associated with a corresponding road segment of the current lane on the basis of the first speed limit information, the second speed limit information, the third speed limit information, and the curvature of the current lane;
wherein the driving assistance system is configured to assist in driving a vehicle based on the safety speed,
wherein the high-precision map module (202) is configured to provide the second speed limit information for each lane in a highway,
wherein the high-precision map module (202) is configured to include data for slope, curvature, heading, elevation, and roll of each lane,
wherein the second speed limit information comprises speed limit information of each lane on the current road, and
wherein the third speed limit information comprises at least speed limit information of a lane where a vehicle is located.

8. The system according to claim 7, wherein the image capture and identification module (203) is further configured to capture a lane line image of the current lane, to help the curvature calculation module (210) determine the curvature of the current lane.

9. The system according to claim 7, wherein the curvature of the lane is negatively correlated with the safety speed of the corresponding road segment.

10. The system according to any one of claims 7 to 9, wherein the system is deployed as a distributed system.

11. A storage medium for storing computer executable instructions, wherein the computer executable instructions, when executed by a processor, perform
the steps of the method according to any one of claims 1 to 5.

## Patentansprüche

1. Verfahren zum Bestimmen von Informationen zur sicheren Geschwindigkeit einer Straße, umfassend:
a) Erfassen einer ersten Geschwindigkeitsbegrenzungsinformation für eine aktuelle Straße aus einer Navigationskarte;
a) Erfassen einer zweiten Geschwindigkeitsbegrenzungsinformation für die aktuelle Straße aus einer Präzisionskarte;
c) Erfassen eines Bildes mindestens eines Hinweisschildes auf der aktuellen Straße mittels einer Bilderfassungsvorrichtung und Identifizieren des Bildes, um eine dritte Geschwindigkeitsbegrenzungsinformation für die aktuelle Straße zu bestimmen;
d) Bestimmen einer Krümmung eines aktuellen Fahrstreifens basierend auf einer ersten Eingabe aus der Navigationskarte, einer zweiten Eingabe aus der Präzisionskarte und einer dritten Eingabe aus der Bilderfassungsvorrichtung; und
e) Bestimmen einer sicheren Geschwindigkeit, die einem entsprechenden Straßensegment des aktuellen Fahrstreifens zugeordnet ist, basierend auf der ersten Geschwindigkeitsbegrenzungsinformation, der zweiten Geschwindigkeitsbegrenzungsinformation, der dritten Geschwindigkeitsbegrenzungsinformation und der Krümmung des aktuellen Fahrstreifens,
wobei die Präzisionskarte die zweite Geschwindigkeitsbegrenzungsinformation für jeden Fahrstreifen auf einer Autobahn bereitstellt,
wobei die Präzisionskarte Daten für Neigung, Krümmung, Richtung, Höhe und Rolllage jedes Fahrstreifens enthält,
wobei die zweite Geschwindigkeitsbegrenzungsinformation Geschwindigkeitsbegrenzungsinformationen für jeden Fahrstreifen auf der aktuellen Straße umfasst, und
wobei die dritte Geschwindigkeitsbegrenzungsinformation mindestens die Geschwindigkeitsbegrenzungsinformation eines Fahrstreifens umfasst, auf dem sich ein Fahrzeug befindet.

2. Verfahren nach Anspruch 1, ferner umfassend:
Aufnehmen eines Bildes des aktuellen Fahrstreifens, um daraus Fahrstreifenlinieninformationen zu extrahieren, und Bestimmen der Krümmung des aktuellen Fahrstreifens basierend auf den Fahrstreifenlinieninformationen.

3. Verfahren nach Anspruch 1, wobei die Krümmung des aktuellen Fahrstreifens negativ mit der sicheren Geschwindigkeit des entsprechenden Straßensegments korreliert ist.

4. Verfahren nach einem der Ansprüche 1 bis 3, ferner umfassend:
Empfehlen mindestens einer der ersten Geschwindigkeitsbegrenzungsinformation, der zweiten Geschwindigkeitsbegrenzungsinformation, der dritten Geschwindigkeitsbegrenzungsinformation und der sicheren Geschwindigkeit an einen Benutzer in Echtzeit.

5. Verfahren nach einem der Ansprüche 1 bis 3, ferner umfassend:
Empfehlen der sicheren Geschwindigkeit an einen Benutzer basierend auf historischen Daten über die sichere Geschwindigkeit des Straßensegments, wenn dieser ein bereits durch ihn befahrenes Straßensegment befährt.

6. Fahrassistenzverfahren, umfassend:
Anwenden eines Verfahrens nach einem der Ansprüche 1 bis 5, um einem Benutzer die sichere Geschwindigkeit zu empfehlen oder um die sichere Geschwindigkeit auf ein durch einen Benutzer geführtes Fahrzeug anzuwenden.

7. Fahrassistenzsystem basierend auf Informationen zur Straßengeschwindigkeitsbegrenzung, umfassend:
ein Navigationsmodul (201) zum Erfassen einer ersten Geschwindigkeitsbegrenzungsinformation für eine aktuelle Straße;
ein Präzisionskartenmodul (202) zum Bestimmen einer zweiten Geschwindigkeitsbegrenzungsinformation für die aktuelle Straße;
ein Bilderfassungs- und Bildidentifizierungsmodul (203) zum Erfassen eines Bildes von mindestens einem Hinweisschild auf der aktuellen Straße und zum Identifizieren des Bildes, um eine dritte Geschwindigkeitsbegrenzungsinformation der aktuellen Straße zu bestimmen;
ein Krümmungsberechnungsmodul (210) zum Bestimmen einer Krümmung eines aktuellen Fahrstreifens basierend auf einer ersten Eingabe aus dem Navigationsmodul (201), einer zweiten Eingabe aus dem Präzisionskartenmodul (202) und einer dritten Eingabe aus dem Bilderfassungs- und Bildidentifizierungsmodul (203); und
ein Sicherheitsgeschwindigkeitsbestimmungsmodul (220) zum Bestimmen einer sicheren Geschwindigkeit im Zusammenhang mit einem entsprechenden Straßensegment des aktuellen Fahrstreifens basierend auf der ersten Geschwindigkeitsbegrenzungsinformation, der zweiten Geschwindigkeitsbegrenzungsinformation, der dritten Geschwindigkeitsbegrenzungsinformation und der Krümmung des aktuellen Fahrstreifens;
wobei das Fahrassistenzsystem dazu ausgelegt ist, das Führen eines Fahrzeugs basierend auf der sicheren Geschwindigkeit zu unterstützen,
wobei das Präzisionskartenmodul (202) dazu ausgelegt ist, die zweite Geschwindigkeitsbegrenzungsinformation für jeden Fahrstreifen auf einer Autobahn bereitzustellen,
wobei das Präzisionskartenmodul (202) dazu ausgelegt ist, Daten für Neigung, Krümmung, Richtung, Höhe und Rolllage jedes Fahrstreifens zu enthalten,
wobei die zweite Geschwindigkeitsbegrenzungsinformation Geschwindigkeitsbegrenzungsinformationen für jeden Fahrstreifen auf der aktuellen Straße umfasst, und
wobei die dritte Geschwindigkeitsbegrenzungsinformation mindestens die Geschwindigkeitsbegrenzungsinformation eines Fahrstreifens umfasst, auf dem sich ein Fahrzeug befindet.

8. System nach Anspruch 7, wobei das Bilderfassungsund Bildidentifizierungsmodul (203) ferner dazu ausgelegt ist, ein Fahrstreifenlinienbild des aktuellen Fahrstreifens zu erfassen, um dem Krümmungsberechnungsmodul (210) bei der Bestimmung der Krümmung des aktuellen Fahrstreifens zu helfen.

9. System nach Anspruch 7, wobei die Krümmung des Fahrstreifens negativ mit der sicheren Geschwindigkeit des entsprechenden Straßensegments korreliert ist.

10. System nach einem der Ansprüche 7 bis 9, wobei das System als verteiltes System eingesetzt wird.

11. Speichermedium zum Speichern von computerausführbaren Anweisungen, wobei die computerausführbaren Anweisungen beim Ausführen durch einen Prozessor die Schritte des Verfahrens nach einem der Ansprüche 1 bis 5 durchführen.

## Revendications

1. Procédé de détermination d'informations de vitesse de sécurité d'une route, comprenant :
a) l'acquisition de premières informations de limitation de vitesse d'une route actuelle à partir d'une carte de navigation ;
b) l'acquisition de secondes informations de limitation de vitesse de la route actuelle à partir d'une carte de haute précision ;
c) la capture d'une image d'au moins un panneau de signalisation sur la route actuelle au moyen d'un dispositif de capture d'image, et l'identification de l'image pour déterminer des troisièmes informations de limitation de vitesse de la route actuelle ;
d) la détermination d'une courbure d'une voie actuelle sur la base d'une première entrée provenant de la carte de navigation, d'une seconde entrée provenant de la carte de haute précision, et d'une troisième entrée provenant du dispositif de capture d'image ; et
e) la détermination d'une vitesse de sécurité associée à un segment de route correspondant de la voie actuelle sur la base des premières informations de limitation de vitesse, des secondes informations de limitation de vitesse, des troisièmes informations de limitation de vitesse, et de la courbure de la voie actuelle,
dans lequel la carte de haute précision fournit les secondes informations de limitation de vitesse pour chaque voie d'une grande route,
dans lequel la carte de haute précision inclut des données pour la pente, la courbure, la direction, l'élévation, et le roulis de chaque voie,
dans lequel les secondes informations de limitation de vitesse comprennent des informations de limitation de vitesse de chaque voie sur la route actuelle, et
dans lequel les troisièmes informations de limitation de vitesse comprennent au moins des informations de limitation de vitesse d'une voie où un véhicule se trouve.

2. Procédé selon la revendication 1, comprenant en outre :
la capture d'une image de la voie actuelle pour en extraire des informations de ligne de voie, et la détermination de la courbure de la voie actuelle sur la base des informations de ligne de voie.

3. Procédé selon la revendication 1, dans lequel la courbure de la voie actuelle est corrélée négativement avec la vitesse de sécurité du segment de route correspondant.

4. Procédé selon l'une quelconque des revendications 1 à 3, comprenant en outre :
la recommandation à un utilisateur en temps réel d'au moins l'une des premières informations de limitation de vitesse, des secondes informations de limitation de vitesse, des troisièmes informations de limitation de vitesse, et de la vitesse de sécurité.

5. Procédé selon l'une quelconque des revendications 1 à 3, comprenant en outre :
la recommandation à un utilisateur, lorsque l'utilisateur conduit sur un segment de route qu'il ou elle a déjà traversé, de la vitesse de sécurité sur la base de données historiques concernant la vitesse de sécurité du segment de route.

6. Procédé d'aide à la conduite, comprenant :
l'utilisation d'un procédé selon l'une quelconque des revendications 1 à 5 pour recommander à un utilisateur la vitesse de sécurité ou pour appliquer la vitesse de sécurité à un véhicule conduit par un utilisateur.

7. Système d'aide à la conduite basé sur des informations de limitation de vitesse de route, comprenant :
un module de navigation (201) pour acquérir des premières informations de limitation de vitesse d'une route actuelle ;
un module de carte de haute précision (202) pour déterminer des secondes informations de limitation de vitesse de la route actuelle ;
un module de capture d'image et d'identification d'image (203) pour capturer une image d'au moins un panneau de signalisation sur la route actuelle, et pour identifier l'image pour déterminer des troisièmes informations de limitation de vitesse de la route actuelle ;
un module de calcul de courbure (210) pour déterminer une courbure d'une voie actuelle sur la base d'une première entrée provenant du module de navigation (201), d'une seconde entrée provenant du module de carte de haute précision (202) et d'une troisième entrée provenant du module de capture d'image et d'identification d'image (203) ; et
un module de détermination de vitesse de sécurité (220) pour déterminer une vitesse de sécurité associée à un segment de route correspondant de la voie actuelle sur la base des premières informations de limitation de vitesse, des secondes informations de limitation de vitesse, des troisièmes informations de limitation de vitesse, et de la courbure de la voie actuelle ;
dans lequel le système d'aide à la conduite est configuré pour assister la conduite d'un véhicule sur la base de la vitesse de sécurité,
dans lequel le module de carte de haute précision (202) est configuré pour fournir les secondes informations de limitation de vitesse pour chaque voie d'une grande route,
dans lequel le module de carte de haute précision (202) est configuré pour inclure des données pour la pente, la courbure, la direction, l'élévation, et le roulis de chaque voie,
dans lequel les secondes informations de limitation de vitesse comprennent des informations de limitation de vitesse de chaque voie sur la route actuelle, et
dans lequel les troisièmes informations de limitation de vitesse comprennent au moins des informations de limitation de vitesse d'une voie où un véhicule se trouve.

8. Système selon la revendication 7, dans lequel le module de capture d'image et d'identification d'image (203) est en outre configuré pour capturer une image de ligne de voie de la voie actuelle, pour aider le module de calcul de courbure (210) à déterminer la courbure de la voie actuelle.

9. Système selon la revendication 7, dans lequel la courbure de la voie est corrélée négativement avec la vitesse de sécurité du segment de route correspondant.

10. Système selon l'une quelconque des revendications 7 à 9, dans lequel le système est déployé en tant que système distribué.

11. Support de stockage pour stocker des instructions pouvant être exécutées par un ordinateur, dans lequel les instructions pouvant être exécutées par un ordinateur, lorsqu'elles sont exécutées par un processeur, mettent en œuvre les étapes du procédé selon l'une quelconque des revendications 1 à 5.
